# EUROPEAN PATENT APPLICATION

(11) **EP 1 847 410 A2**
(43) Date of publication of application: **24.10.2007**
(21) Application number: 07106709.4
(22) Date of filing: 23.04.2007
(51) Int. Cl.: B60J 7/10

(54) **Device for transporting goods at an airport**

(30) Priority: 21.04.2006 NL 1031663
(71) Applicant: Trailer Construction & Repairing Nederland (TCR) B.V., 1118 LN Schiphol Z.O. (NL)
(72) Inventor: Van der Ploeg, Melle Andele, 3628 EC Kockengen (NL)
(74) Representative: van Westenbrugge, Andries

(57) **Abstract**

A device for transporting goods across an apron for aeroplanes, such as a luggage trolley, comprises a loading floor and at least two standing side walls, which extend from the loading floor. Furthermore, a tarpaulin is provided, which can be arranged over the loading floor. At least two flexible support rods for supporting the tarpaulin are provided. Each of the support rods protrudes above the side walls. The tarpaulin is dimensioned such that, when the tarpaulin has been arranged around the support rods, the flexible support rods are pretensioned towards one another at the top ends thereof which are facing away from the loading floor. During a collision of the device with an aeroplane, the flexible support rod will come into contact with the aeroplane first. This reduces the risk of damage to the aeroplane.

## Description

The invention relates to a device, in particular for transporting goods across an apron for aeroplanes, such as a luggage trolley, comprising a loading floor, at least one standing front wall, a standing rear wall which is situated opposite the front wall, which walls extend from the loading floor, as well as a tarpaulin, which can be arranged over the loading floor.

The device according to the invention forms, for example, a trolley for luggage and/or cargo, such as post bags - in this case the device comprises wheels, with which the device can be moved across the apron. In addition, the device according to the invention may be what is referred to as an airport-bound transport module. With said transport module, the loading floor forms a platform which can be accommodated on a trolley or a conveyor track, such as a roller conveyor. The transport module itself has no wheels, but can be displaced by means of said trolley or conveyor track. In addition, it is possible for the device according to the invention to form a so-called aeroplane container for luggage and/or cargo. Similar to the transport module, an aeroplane container can be moved across the apron by means of a trolley. The aeroplane container can also be loaded into the cargo space of an aeroplane.

WO 97/46405 discloses a luggage trolley for transporting luggage across an airport. By means of this luggage trolley, it is possible to take luggage from, for example, an aeroplane to an arrivals terminal. The luggage trolley is a trailer, which can be moved by means of a tractor. Usually, several luggage trolleys are coupled together, following which these coupled luggage trolleys are pulled away by the tractor.

Before the luggage trolley is loaded, the tarpaulin is removed so that the loading floor is freely accessible. When the luggage trolley has been fully loaded, the tarpaulin is pulled taut over the luggage which is on the loading floor. The luggage is thus protected against weather conditions, such as rain and wind.

While said luggage trolley moves across the apron of the airport, the luggage is covered by the tarpaulin. However, during this operation, the tarpaulin may become caught between the wheels, resulting in the tarpaulin being torn and damaged. The driver of the tractor at the head of the line of coupled luggage trolleys will hardly ever notice in time that the tarpaulin has become caught between the wheels. Moreover, this causes significant wear and sometimes even damage to the wheels, for example to the wheel bearings.

Furthermore, the apron of the airport across which the tractors with the coupled luggage trolleys drive forms a dangerous environment. In practice, there is a significant risk of luggage trolleys colliding with parked aeroplanes. After all, the luggage trolleys are driven close to the aeroplane in order to be loaded or unloaded. A collision between this luggage trolley and an aeroplane can seriously damage the aeroplane, resulting in expensive repairs.

It is an object of the invention to provide a device for transporting goods, in which the tarpaulin is hardly, if ever, torn and damaged by becoming caught between the wheels and the risk of damage in the event of a collision is reduced.

According to the invention, this object is achieved in that at least two flexible support rods for supporting the tarpaulin are provided, each of which support rods protrudes above the walls, and that the tarpaulin is dimensioned such that, when the tarpaulin has been arranged around the support rods, the flexible support rods are bent or pretensioned towards one another at the top ends thereof which are remote from the loading floor.

According to the invention, the tarpaulin can be pulled taut over the flexible support rods. The support rods and the tarpaulin stretched over the latter form a flexible and resilient superstructure of the device. This flexible superstructure is designed in the form of a tilt. The support rods are pretensioned as a result of being bent. The pretensioned support rods pull the tarpaulin taut. Thus, the flapping of the tarpaulin during transportation is reduced and it is virtually impossible for the tarpaulin to become trapped between the wheels of the trolley.

In addition, the risk of damage in the event of a collision with an aeroplane is reduced. A parked aeroplane rests on the apron by means of its undercarriage comprising wheels. The further component parts of the aeroplane, for example the fuselage or the wing, are at some distance above the apron. In the case of a collision, the flexible support rods with the tarpaulin come into contact with the aeroplane first. The flexible superstructure will then bend along and slow the device down somewhat. In this case, the flexible support rods deform elastically, after which they return to their original position. As a result, little, if any, damage is caused to the aeroplane.

A further advantage of the device according to the invention is that the tarpaulin can be fitted and removed relatively quickly. To this end, airport staff only have to slide the tarpaulin over the support rods. Particularly at an airport, the time which is required for processing luggage is important. If loading and unloading the luggage trolleys at an airport can be carried out quickly, the aeroplane can leave sooner and passengers who have just arrived will not have to wait so long for their luggage.

A further advantage of the device according to the invention is that the capacity of the device is increased. Using a loading floor of the same size, additional luggage and/or cargo can be stacked as the luggage and/or cargo may protrude relatively far above the side walls without falling off the device while being moved across the apron. After all, this additional luggage and/or cargo is retained inside the flexible superstructure.

It is noted that a loading platform is known from US 5664824. This loading platform is intended for receiving loose material, such as sand or gravel. Flexible and resilient support poles for a tarpaulin are provided transversely across the loading floor of the loading platform. The slightly upwardly bent support poles ensure that rain water drains away. When the loading platform is loaded, for example by sand being poured in, the support arms yield slightly. The technical field of this loading platform is not the transportation of goods across an airport and neither is this loading platform suitable for this purpose. In contrast to the flexible superstructure according to the invention, this loading platform is not flexible in the direction of travel. In the event of a collision with an aeroplane, one of the hard walls will come into contact with the aeroplane first, thus inevitably causing damage to the aeroplane.

According to the invention, it is preferable that the flexible support rods are provided at two opposite ends of the device. The standing front wall and rear wall are located opposite one another, while each of the support rods in each case runs along one of these walls. In this case, it is possible to omit a longitudinal side therebetween on the device, so that this longitudinal side forms a lateral access opening for loading and unloading the device. If the tarpaulin is arranged over the flexible support rods, these support rods keep the tarpaulin pretensioned in the direction of travel.

According to the invention, it is preferable that only two flexible support rods are provided - one support rod along the front wall and one support rod along the rear wall. In this case, the loading floor between the front wall and the rear wall is freely accessible for loading and unloading.

In one embodiment, the dimensions of the tarpaulin between the top ends of the flexible support rods are smaller than the dimensions of the tarpaulin between the walls, if the tarpaulin is arranged around the support rods over the loading floor. This is advantageous in order to pretension the tarpaulin in the direction of travel.

According to the invention, it is possible that the tarpaulin comprises a front section, an intermediate section and a rear section, which are attached to one another, and in which the flexible support rods are connected to the tarpaulin where the front section is attached to the intermediate section and where the rear section is attached to the intermediate section, respectively. The flexible support rods are, for example, connected to the tarpaulin by accommodating the former in tubular recesses, loops or other receiving means. These receiving means are disposed at the connection between the intermediate section and the front section and rear section, respectively. If the tarpaulin is arranged over the loading floor, the intermediate section forms a roofing section with a ridge. The tarpaulin is formed in such a manner that the dimensions of the ridge of the intermediate section between the front and rear section are smaller than the dimensions of the bottom edges of the intermediate section between the front and rear section. When the tarpaulin is being arranged over the loading floor, the receiving means slide over the flexible support rods. Due to the shape of the tarpaulin, the flexible support rods are in this case pretensioned towards one another at their top ends.

This results in the tarpaulin "automatically" becoming pretensioned when it is being arranged over the loading floor.

In one embodiment, each of the flexible support rods protrudes above the walls by a height H which is greater than 0.3 metres, preferably greater than 0.5 metres, such as greater than 0.8 or 1 metre. Although the support rods according to the invention may also protrude above the side walls by a lesser or greater height, the abovementioned heights H are particularly suitable. Thus, each flexible support rod protrudes relatively far above the standing side walls. Consequently, in the event of a collision of the device according to the invention with, for example, the fuselage of the aeroplane, the flexible support rods come into contact with the fuselage before the rigid side walls.

According to the invention, it is possible that each of the standing side walls has a top edge, and the angle between the longitudinal direction of a support rod and the vertical at the top edge is smaller than 45°, preferably smaller than 30°, such as smaller than 15°. Each of the support rods runs, for example, upwards along the standing side walls, substantially vertically. The support rods "start" from the top edge of the side walls and continue virtually straight upwards. Thus, a superstructure having a considerable height is formed above the substructure, which comprises the loading floor and the side walls.

According to the invention, each of the support rods may be bent through 180°. A roofing construction with support rods of this type is particularly simple and inexpensive.

In one embodiment of the invention, each of the support rods has two ends, each of which ends extends to close to the loading floor. If the support rods extend almost as far as the loading floor, the support rods are relatively long. This improves the flexibility of the superstructure and the support rods can be reliably attached.

In order to securely attach the support rods to the device according to the invention, at least one standing receiving tube may be provided, in which an end section of the support rod is secured. Both end sections of the support rods are, for example, inserted in each case into a respective receiving tube. By inserting a locking pin into the receiving tube and the end section of a support rod, said end section is secured against displacement. This fastening of the support rod is particularly simple and reliable.

According to the invention, it is possible to use different materials in order to achieve the flexibility and resilience of the support rods. Each of the support rods, for example, comprises carbon fibre and/or optical fibre and/or spring steel.

The device according to the invention is in particular intended to be used on an apron. Such a device usually has no independent drive. If the device is a trolley, said trolley does not comprise a driving motor, as the trolley is a trailer. A transport module or airfreight container does not normally have a dedicated drive either.

The invention also relates to the use of the above-described device, such as at an airport. Incidentally, the device according to the invention may also be used for other applications, such as on a production site or a ferry.

The invention will now be explained in more detail by way of example with reference to the attached drawing, in which:
Figure 1 shows a trolley for transporting goods across an apron according to the invention;
Figure 2 shows a side view of the trolley illustrated in Figure 1;
Figure 3 shows a transport module for transporting goods across an apron according to the invention, in which the tarpaulin has been omitted;
Figure 4 shows a detail of a fastening for a flexible support rod.

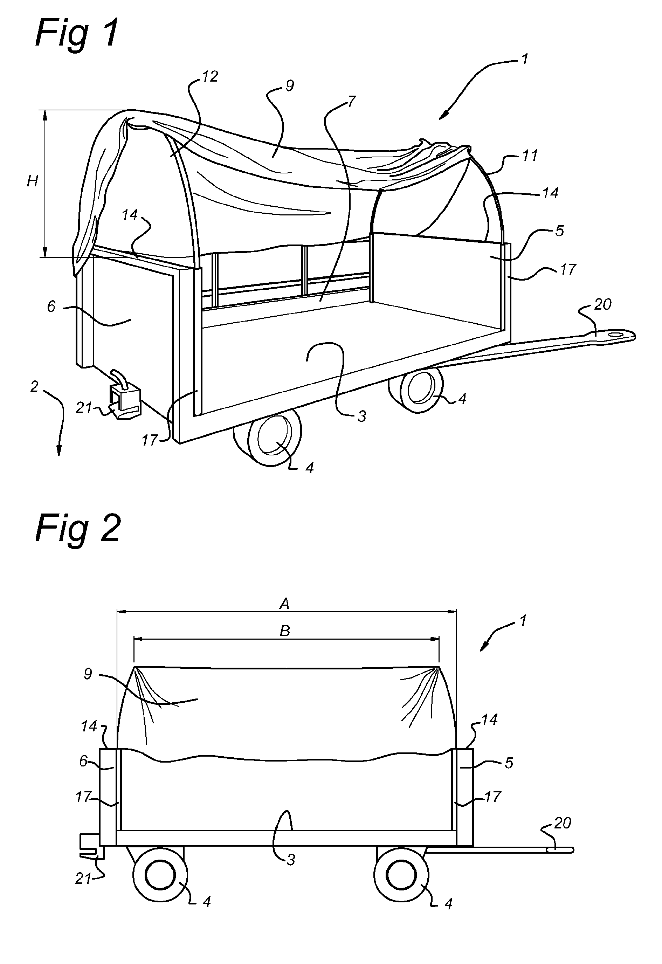

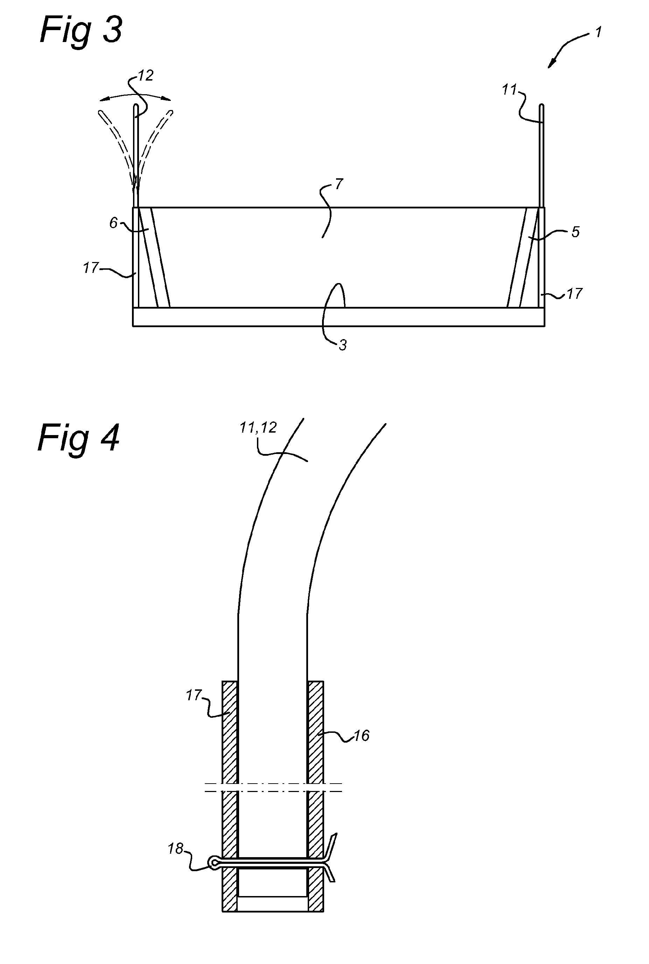

The device for transporting goods across an apron according to the invention is denoted in Figures 1 and 2 in its entirety by reference numeral 1. In Figure 1, the device 1 forms a trolley for transporting luggage and/or cargo, such as mail bags. The device 1 illustrated in Figure 3 forms a so-called airport-bound transport module.

The trolley 1 illustrated in Figure 1 comprises an undercarriage with wheels 4, by means of which the trolley 1 can be moved across an apron 2. The trolley 1 has a front and a rear, which extend substantially transversely to the direction of travel of the trolley 1. The trolley 1 has two longitudinal sides, which run substantially parallel to the direction of travel.

The trolley 1 is a trailer. The trolley 1 has a towing element 20 at the front and a coupling member 21 at the rear. The towing element 20 can be coupled to the coupling member 21 of a further trolley 1 or of a tractor (not shown). In use, several trolleys 1 which are coupled to one another are pulled across the apron 2 by means of a tractor.

The trolley 1 comprises a loading floor 3, on which various layers of luggage and/or cargo can be accommodated (not illustrated). The trolley 1 in this exemplary embodiment comprises three standing walls or side walls 5, 6, 7, which are attached to the loading floor 3. The standing side walls 5, 6 at the front and rear of the trolley 1 form solid walls, each of which is delimited by a top edge 14. Viewed in the direction of travel, the wall 5 is a front wall, while the wall 6 forms a rear wall. The side wall 7 on one of the longitudinal sides of the trolley 1 is designed in the form of a partially open railing. The opposite longitudinal side of the trolley 1 is substantially open for loading and unloading the loading floor 3.

The loading floor 3 and the standing walls 5, 6, 7 are usually made of metal, such as steel and/or aluminium. The loading floor 3 and the standing walls 5, 6, 7 form a rigid substructure of the trolley 1. A flexible superstructure is arranged on top of the rigid substructure, i.e. above the top edges 14 of the side walls 5, 6.

The flexible superstructure in this exemplary embodiment comprises two support rods 11, 12 and a tarpaulin 9. The support rods 11, 12 are made of a flexible and resilient material, such as carbon fibres. The support rods 11, 12 are, for example, each made from a single straight carbon tube, which is bent through 180°. The tarpaulin 9 can be pulled taut over these support rods 11, 12. The flexible superstructure forms a roofing structure, with the support rods 11, 12 acting as arches.

Due to the flexible roofing structure, luggage and/or cargo on the loading floor 3 can be reliably protected against weather conditions. In addition, the use of the roofing structure reduces the risk of the tarpaulin 9 of the trolley 1 becoming caught between the wheels 4 to a minimum.

The tarpaulin 9 has a particular shape, that is to say the tarpaulin 9 is wider near the side walls 11, 12 than at the ridge of the tarpaulin 9 (see Figure 2). When the tarpaulin 9 is fitted to the support rods 11, 12, the longitudinal dimension B of the tarpaulin 9 between the tips of the support rods 11, 12 is smaller than the longitudinal dimension A of the tarpaulin 9 between the walls 5, 6. The tarpaulin 9 bends the top ends of the flexible support rods 11, 12 slightly towards one another. The flexible support rods 11, 12 then pull the tarpaulin 9 taut, so that there is little, if any, flapping of the tarpaulin 9 when the trolley 1 is being moved.

As is clearly illustrated in Figure 1, the flexible superstructure extends beyond the top edges 14 of the walls 5, 6, 7 over a considerable height H. The height H is, for example, approximately 1 metre. The height H is thus nearly equal to the height of the walls 5, 6 of the rigid substructure.

When the trolley 1 is moved across the apron 2, a collision of the trolley 1 with, for example, a fuselage of an aeroplane may occur. The fuselage is at a height above the apron 2. In the case of a flexible superstructure having the abovementioned height H, little damage, if any, is caused to the aeroplane, since the height of the support rods 11, 12 is such that the flexible superstructure comes into contact with the fuselage first. The flexible superstructure will then give slightly due to the flexible support rods 11, 12 bending. The support rods 11, 12 thus absorb part of the collision energy, which results in the trolley being slowed down.

The desired height and flexibility of the superstructure can be achieved in various ways. In the exemplary embodiment illustrated in Figure 1, the support rods 11, 12 are fastened on the front and the rear of the trolley 1, respectively. The support rods 11, 12 run transversely to the direction of travel of the trolley 1.

The ends of each flexible support rod 11, 12 are substantially close to the loading floor 3 of the trolley 1. From these ends, the support rods 11, 12 extend substantially vertically upwards along the walls 5, 6. Figure 1 shows that the support rods 11, 12 continue substantially vertically upwards beyond the top edges 14 of the side walls 5, 6, thus resulting in a flexible superstructure of sufficient height.

The fastening of the support rods 11, 12 is illustrated in detail in Figure 4. The support rods 11, 12 are attached to the trolley 1 by locking the end sections 16 thereof into receiving tubes 17. The receiving tubes 17 are, for example, attached to the surfaces of the walls 5, 6 facing one another. The end sections 16 of the support rods 11, 12 are in this case, for example, fixed in the receiving tubes 17 by means of a cotter pin 18. This fastening is particularly reliable, simple and inexpensive.

With the transport module 1 illustrated in Figure 3, identical parts are denoted by the same reference numerals. From the loading floor upwards, the walls or side walls 5, 6, 7 run slightly obliquely outwards. In this exemplary embodiment, the side walls 5, 6, 7 of the transport module 1 are designed as solid walls. The receiving tubes 17 for the support rods 11, 12 are arranged substantially vertically with respect to the loading floor 3 outside the walls 5, 6, 7.

The loading floor 3 of the transport module 1 can be accommodated on a movable undercarriage and/or an optionally driven conveyor track of a luggage-handling system at an airport (not illustrated). The flexible superstructure of the transport module 1 according to Figure 3, which comprises the support rods 11, 12 and the tarpaulin (not illustrated), has the same advantages as described above for the trolley 1 illustrated in Figure 1.

The invention is obviously not limited to the exemplary embodiment illustrated in the figures. The person skilled in the art will be able to make various modifications without departing from the scope of the invention. For example, the support rods may extend in the longitudinal direction of the loading floor rather than in the transverse direction thereof. It is also possible to use the flexible superstructure according to the invention with an airfreight container. In addition, the invention is not limited to the use on an apron - the device or trolley according to the invention is also suitable for other applications, such as on a production site or on a ferry.

## Claims

1. Device, in particular for transporting goods across an apron (2) for aeroplanes, such as a luggage trolley, comprising a loading floor (3), a standing front wall (5), a standing rear wall (6) which is situated opposite the front wall (5), which walls (5, 6) extend from the loading floor (3), as well as a tarpaulin (9), which can be arranged over the loading floor (3), **characterized in that** at least two flexible support rods (11, 12) for supporting the tarpaulin (9) are provided, each of which support rods (11, 12) protrudes above the walls (5, 6), and **in that** the tarpaulin (9) is dimensioned such that, when the tarpaulin (9) has been arranged around the support rods (11, 12), the flexible support rods (11, 12) are pretensioned towards one another at the top ends thereof which are facing away from the loading floor (3).

2. Device according to Claim 1, in which the flexible support rods (11, 12) are provided at two opposite ends of the device (1).

3. Device according to Claim 1 or 2, in which the dimensions of the tarpaulin (9) between the top ends of the flexible support rods (11, 12) are smaller than the dimensions of the tarpaulin (9) between the walls (5, 6), if the tarpaulin (9) is arranged around the support rods (11, 12) over the loading floor (3).

4. Device according to one of the preceding claims, in which the tarpaulin (9) comprises a front section, an intermediate section and a rear section, which are attached to one another, and in which the flexible support rods (11, 12) are connected to the tarpaulin (9) where the front section is attached to the intermediate section and where the rear section is attached to the intermediate section, respectively.

5. Device according to one of the preceding claims, in which each of the support rods (11, 12) protrudes above the walls (5, 6) by a height H which is greater than 0.3 metres, preferably greater than 0.5 metres, such as greater than 0.8 or 1 metre.

6. Device according to one of the preceding claims, in which each of the standing side walls (5, 6) has a top edge (14), and in which the angle between the longitudinal direction of a support rod (11, 12) and the vertical at the top edge (14) is smaller than 45°, preferably smaller than 30°, such as smaller than 15°.

7. Device according to one of the preceding claims, in which each of the support rods (11, 12) extends substantially vertically upwards along the standing side walls (5, 6).

8. Device according to one of the preceding claims, in which each of the support rods (11, 12) is bent through 180°.

9. Device according to one of the preceding claims, in which each of the support rods (11, 12) has two ends, each of which ends extends to near the loading floor (3).

10. Device according to one of the preceding claims, in which at least one standing receiving tube (17) is provided, in which an end section (16) of the support rod (11, 12) is secured.

11. Device according to one of the preceding claims, in which each of the support rods (11, 12) comprises carbon fibre and/or optical fibre and/or spring steel.

12. Device according to one of the preceding claims, in which the tarpaulin (9) is dimensioned such that, when the tarpaulin (9) has been arranged around the support rods (11, 12), the flexible support rods (11, 12) are bent towards one another at the top ends which are facing away from the loading floor (3).

13. Device according to one of the preceding claims, in which each of the support rods (11, 12) protrudes above the side walls (5, 6) by a height H which is greater than half the height of said side walls (5, 6), preferably greater than ¾ of the height of said side walls (5, 6), such as greater than ⅞ of the height of said side walls (5, 6).

14. Device according to one of the preceding claims, in which the device (1) has no drive.

15. Device according to one of the preceding claims, in which the device (1) is provided with a lateral access for loading and unloading the loading floor (3).

16. Device according to one of the preceding claims, in which the device (1) forms a trolley, such as a trailer.

17. Use of the device according to one of the preceding claims, such as at an airport.
